# FASCICULE DE BREVET EUROPEEN

(11) **EP 3 822 540 B1**
(45) Date de publication et mention de la délivrance du brevet: **20.03.2024**
(21) Numéro de dépôt: 20207314.4
(22) Date de dépôt: 12.11.2020
(51) Int. Cl.: F23G 5/36, B01J 19/12, C10J 3/72, C10J 3/48, F23G 7/12, F23G 7/10

(54) **RÉACTEUR SOLAIRE À JET À TRANSFERT THERMIQUE AMÉLIORÉ ET PROCÉDÉ DE FONCTIONNEMENT D'UN RÉACTEUR SOLAIRE À JET À TRANSFERT THERMIQUE AMÉLIORÉ**
SOLARSTRAHLREAKTOR MIT VERBESSERTER WÄRMEÜBERTRAGUNG UND VERFAHREN ZUM BETRIEB EINES SOLARSTRAHLREAKTORS MIT VERBESSERTER WÄRMEÜBERTRAGUNG
JET SOLAR REACTOR WITH IMPROVED HEAT TRANSFER AND METHOD FOR OPERATION A JET SOLAR REACTOR WITH IMPROVED HEAT TRANSFER

(30) Priorité: 14.11.2019 FR 1912693
(43) Date de publication de la demande: 19.05.2021
(73) Titulaire: Commissariat à l'Energie Atomique et aux Energies Alternatives, 75015 Paris (FR)
(72) Inventeur: RODAT, Sylvain, 38054 GRENOBLE (FR); BOUJJAT, Houssame, 38054 GRENOBLE (FR); CHANDEZ, Bertrand, 38054 GRENOBLE (FR)
(74) Mandataire: Cabinet Nony

(56) Documents cités:
- WO-A1-2015/048845
- US-A1- 2012 222 355
- Quentin Bellouard: "Valorisation de biomasse en vecteur énergétique par voie thermochimique solaire", , 10 novembre 2017 (2017-11-10), XP055709732, Extrait de l'Internet: URL:https://www.infothek-biomasse.ch/image s//349_2017_Bellouard_Valorisation-biomass e-par-thermochimique-solaire.pdf [extrait le 2020-06-29]

## Description

### Domaine technique

La présente invention concerne le domaine des réacteurs dit « solaires », c'est-à-dire utilisant au moins en partie l'énergie du rayonnement solaire qui est concentrée en tant qu'apport de l'énergie nécessaire à une réaction chimique endothermique.

Plus particulièrement, l'invention a trait à une amélioration d'un type de réacteur solaire, à jet, en vue d'augmenter les échanges thermiques entre l'énergie solaire concentrée qui est apportée et le jet.

L'application principale visée par un réacteur solaire selon l'invention est la conversion thermochimique d'une charge carbonée, en particulier un hydrocarbure ou une biomasse, en un gaz de synthèse contenant majoritairement de l'hydrogène (H2) et du monoxyde de carbone (CO), en vue de produire des carburants liquides (Diesel Fischer-Tropsch "FT", Diméthyl éther "DME", Méthanol) ou gazeux (gaz naturel synthétique, "SNG" ou "Synthetic Natural Gas" en anglais) ou autres produits chimiques de synthèse, tels que le méthanol par exemple ou bien en hydrocarbures insaturées et/ou aromatiques tels que des produits issus du vapocraquage des coupes pétrolières légères.

On désigne sous l'appellation « charge carbonée », tout matériau combustible constitué de composés contenant du carbone.

Il peut donc s'agir de biomasse, c'est-à-dire tout matériau inhomogène d'origine végétale contenant du carbone, tel que de la biomasse ligno-cellulosique, des résidus forestiers ou agricoles (paille), qui peut être quasi-sec ou imbibé d'eau comme les déchets ménagers.

Il peut aussi s'agir d'un hydrocarbure, en particulier un combustible d'origine fossile, tel que le charbon.

Il peut aussi s'agir de déchets combustibles d'origine industrielle contenant du carbone, tel que des matières plastiques ou des pneumatiques.

II peut aussi s'agir d'une combinaison de biomasse et de combustible d'origine fossile. D'autres applications peuvent être envisagées. Par exemple, le reformage peut être mis en oeuvre avantageusement par un réacteur solaire selon l'invention.

De manière générale, toute réaction chimique endothermique peut être mise en oeuvre par l'invention.

### Technique antérieure

Les réacteurs dits « solaires » sont des réacteurs chimiques adaptés pour convertir au moins en partie l'énergie du rayonnement solaire concentré en de la chaleur afin de mettre en oeuvre des réactions endothermiques de type reformage, gazéification, décarbonatation, craquage... De l'art antérieur, on connaît bon nombre de conceptions de réacteurs solaires adaptés à plusieurs réactions chimiques ou de manière privilégiée pour un type de réaction. On peut citer ici la publication [1], qui fait une revue générale des conceptions de tous les réacteurs solaires connus, ou encore la publication [2] qui se focalise sur les réacteurs solaires adaptés particulièrement au reformage ou encore la publication [3] qui détaille ceux pour la gazéification.

De manière générale, il existe trois types de réacteurs solaires : ceux à lits fluidisés, ceux à lits fixes et ceux à flux entraînés.

Indépendamment du type de réacteur, on distingue deux grandes familles de réacteurs à savoir les réacteurs à chauffage par ensoleillement direct et les réacteurs à chauffage par ensoleillement indirect. La distinction se fait sur la façon dont les réactifs vont recevoir le flux solaire. Dans le cas d'un ensoleillement direct, les réactifs sont directement exposés au flux solaire concentré, ce qui permet d'atteindre de hauts niveaux de température, en fonction du facteur de concentration.

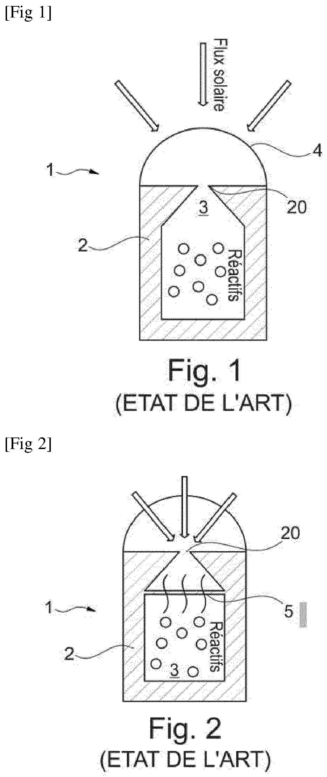

On a représenté schématiquement en figure 1, un réacteur solaire 1 à chauffage direct. Un tel réacteur 1 comprend une enveloppe 2 délimitant la chambre de réaction 3 dans laquelle sont présents les réactifs de la réaction endothermique à réaliser. Un hublot transparent 4 de concentration du rayonnement solaire est monté sur le dessus de l'enveloppe 2. Ce hublot transparent 4 sépare donc la chambre de réaction 3 de l'air extérieur et laisse passer le flux solaire, qui passe concentré à travers l'ouverture 20 dédiée en haut de la chambre 2.

Cependant, ce type de technologie nécessite l'utilisation d'une fenêtre ou d'un hublot transparent. La présence de cette surface transparente peut s'avérer handicapante si les flux de réactifs et de produits (gaz, char, goudrons) sont mal gérés. En effet, la salissure de cette surface peut entraîner son opacification et donc sa surchauffe sous l'effet du flux concentré. Il s'avère donc nécessaire de maintenir propre cette fenêtre ou hublot transparent, ce qui crée une difficulté opérationnelle

A l'inverse, dans le cas d'un ensoleillement indirect, c'est une paroi opaque qui reçoit le flux solaire concentré et le transmet par rayonnement infrarouge aux réactifs à l'intérieur du réacteur ce qui évite tout problème lié à la présence d'un hublot. En revanche, l'utilisation d'une paroi de transfert induit de plus fortes pertes thermiques dans le réacteur du fait de la réémission d'une partie du rayonnement absorbé vers l'extérieur. Certaines technologies de réacteur solaire pour la gazéification de biomasse permettent la conception de réacteur fonctionnant en mode de chauffage direct ou indirect mais pour d'autres seul un type d'ensoleillement est possible.

On a représenté schématiquement en figure 2, un réacteur solaire 1 à chauffage indirect. Ici, une paroi opaque 5 est fixée dans l'enveloppe 2 et délimite avec celle-ci la chambre de réaction 3.

Les réacteurs dits à jet sont développés depuis des décennies pour des procédés qui impliquent des gaz et des particules solides, notamment pour le séchage de céréales. Ses caractéristiques sont intéressantes en termes d'hydrodynamique. On pourra se reporter à la publication [4]. Les chambres de réaction des réacteurs sont conventionnellement chauffées soit par le gaz de jet en lui-même, qui est préalablement chauffé, soit par combustion interne, soit par chauffage externe.

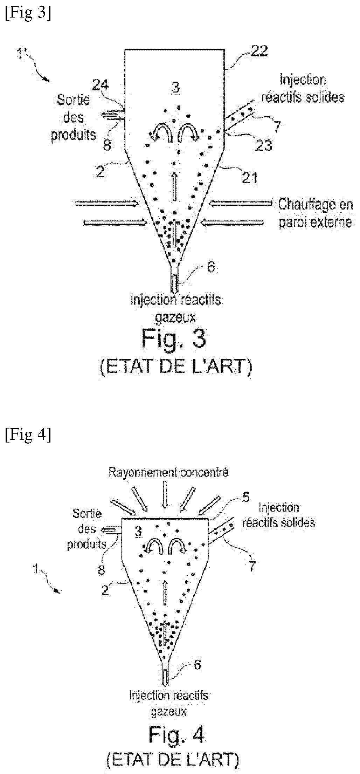

On a représenté en figure 3, un exemple de réacteur à jet l' à chauffage externe. La chambre de réaction 3 est ici délimitée par une enveloppe 2 dont la partie inférieure 21 est un cône droit et la partie supérieure 22 est un cylindre droit borgne. Le cône 21 est prolongé à son sommet vers le bas par une entrée 6 dans laquelle sont injectés les réactifs gazeux. Le cylindre borgne 22 est quant à lui percé de deux perçages 23, 24 dont l'un débouche sur un tube 7 d'injection des réactifs solides et l'autre débouche sur un tube 8 par lequel les produits de la réaction sont évacués. Comme symbolisé par les flèches blanches, le jet de gaz réactifs est projeté dans la chambre de réaction 3 et met en suspension les particules des réactifs solides injectées par le tube 7. Comme illustré sur cette figure 3, le chauffage est apporté par l'extérieur du cône 21.

Dans le cadre des travaux de thèse [5], sur laquelle la forme en deux parties des revendications 1 et 13 est basée, un nouveau type de réacteur solaire a été mis au point : il reprend le principe de fonctionnement d'un réacteur à jet avec, en lieu et place d'un chauffage externe sur l'enveloppe, un apport de chaleur qui est fait par le rayonnement solaire concentré vers le fond borgne 5 du cylindre de l'enveloppe 2. Ce réacteur à jet solaire 1 destiné à la gazéification de biomasse répond aux contraintes des autres types de réacteurs avec de relativement bons transferts de chaleur et de matières, une fluidisation des particules robuste et des temps de séjours importants au moins pour la partie solide.

La demanderesse a également déjà conçu et réalisé un réacteur à jet solaire à mode de chauffage indirect. Ce réacteur solaire 1 est montré en figure 4 : il reprend les différents composants déjà explicités en référence avec la figure 3, avec en outre un corps 9 constitué par une double enveloppe dans laquelle est logée l'enveloppe 2 délimitant la chambre de réaction 3, et sur le dessus par un hublot transparent 4 de concentration du rayonnement solaire qui est maintenu par bride. On distingue également une pièce formant un chapeau 10 en matériau céramique qui vient coiffer le dessus de l'enveloppe 2. Comme symbolisé, ce chapeau 10 limite les pertes radiatives vers l'extérieur de la cavité du corps logeant l'enveloppe 2 et délimite l'ouverture 20, placée au niveau du point focal du hublot 4, qui laisse entrer le flux solaire en direction de la plaque de transfert de chaleur 5 qui constitue le fond du cylindre borgne 22.

Un tel réacteur à jet solaire présente globalement de bonnes performances pour la conversion thermochimique visée.

Toutefois, les inventeurs ont pu constater que l'irradiation indirecte du rayonnement solaire par la plaque de transfert 5 conduit à de forts gradients de température dans la plaque et à des pertes thermiques associées importantes. Or, un mauvais transfert de chaleur à travers la plaque induit une forte différence de température entre la paroi externe (la plus chaude) et la paroi interne. La paroi externe, bien plus chaude que le milieu réactionnel, entraine de fortes pertes radiatives.

Par ailleurs, il est connu que les jets de fluide impactant une plaque améliorent le coefficient d'échange thermique entre ladite plaque et le fluide impactant [6].

Il existe donc un besoin pour améliorer les réacteurs à jet solaire notamment afin de maximiser les transferts thermiques au niveau de la paroi de transfert de chaleur qui reçoit le rayonnement solaire concentré et doit en restituer la chaleur à la chambre du réacteur.

Le but de l'invention est de répondre au moins en partie à ce besoin.

### Exposé de l'invention

Pour ce faire, l'invention concerne, sous l'un de ses aspects, un réacteur solaire comprenant une enveloppe délimitant une chambre de réaction, l'enveloppe comprenant une partie inférieure sous la forme d'un cône droit prolongé à son sommet par une entrée d'injection de réactifs gazeux et une partie supérieure sous la forme d'un cylindre droit borgne, le cône et/ou la surface latérale du cylindre borgne comprenant deux perçages latéraux dont un est prolongé par un tube d'injection de réactifs solides et l'autre est prolongé par un tube de sortie de produits issus de la réaction, le fond du cylindre borgne dont la face externe est destinée à recevoir le rayonnement solaire présentant une face interne destinée à être impactée par le jet de réactifs gazeux.

Selon l'invention, la face interne, impactée par le jet de réactifs gazeux, a une surface structurée.

Avantageusement, la face externe peut également avoir une surface structurée. Une faxe externe avec une surface structurée permet de maximiser l'absorption du rayonnement solaire. On peut ainsi réaliser une texturation de la face ou un dépôt d'un traitement sélectif qui maximise l'absorption du rayonnement visible et minimise l'émission dans l'infra-rouge.

Selon l'invention, la surface structurée est une surface texturée ou une surface plane à une ou plusieurs nervures et/ou rainures.

Selon un premier mode de réalisation, le réacteur solaire comprend un cylindre creux, dit cylindre de confinement, agencé à l'intérieur de l'enveloppe avec son extrémité inférieure débouchant dans cette dernière et son extrémité supérieure fermée par la face interne du fond du cylindre borgne. Ce cylindre de confinement permet d'améliorer l'hydrodynamique du réacteur par une diminution de l'entraînement des particules, une stabilisation du régime de jet et une augmentation du temps de séjour du gaz.

Le cylindre de confinement peut être soudé sur la face interne du fond du cylindre borgne. Avantageusement, le cylindre de confinement peut être supporté par des pattes dans le prolongement de son extrémité inférieure, fixées ou en appui contre le cône de l'enveloppe. Compte tenu des hautes températures atteintes sur le fond du cylindre, un tel supportage du cylindre de confinement peut être avantageux.

Selon une variante de réalisation, on peut prévoir une hélice enroulée et fixée autour du cylindre de confinement ou des ailettes fixées le long et autour du cylindre de confinement à l'intérieur de la chambre de réaction. Cette hélice ou ces ailettes ont pour fonction d'augmenter la surface d'échange, de forcer le passage du gaz sur tout le volume de la chambre de réaction et de former des obstacles à l'entraînement de particules. Cela permet d'améliorer à la fois les échanges thermiques, le temps de séjour des gaz dans le réacteur et de diminuer l'entraînement des particules. On veille à ce que les ailettes soient orientées afin d'assurer que les particules potentiellement entraînées puissent redescendre par gravité et ainsi éviter toute zone d'accumulation.

Selon un deuxième mode de réalisation, le réacteur solaire comprend un cylindre creux, dit cylindre de canalisation de jet, agencé à l'intérieur de l'enveloppe avec ses deux extrémités débouchant dans celle-ci, dont une est en regard du tube d'injection des réactifs gazeux.

Selon une configuration particulièrement avantageuse, le cylindre de confinement est agencé dans le prolongement du cylindre de canalisation de jet.

Selon une variante de réalisation avantageuse, le fond du cylindre délimitant la chambre de réaction est une plaque rapportée et fixée à l'intérieur de la surface latérale du cylindre.

De préférence, le cône et la surface latérale du cylindre délimitant la chambre de réaction sont en un même alliage métallique résistant à haute température, de préférence un alliage fer-chrome-aluminium tandis que le fond du cylindre est en carbure de silicium (SiC) ou en graphite revêtu de SiC ou en tungstène.

Selon un mode de réalisation, le réacteur comprend une vis sans fin agencée dans le tube d'injection des réactifs solides.

L'invention a également pour objet, un procédé de fonctionnement d'un réacteur solaire destiné à la conversion thermochimique d'une charge carbonée, le réacteur comprenant une enveloppe délimitant une chambre de réaction, l'enveloppe comprenant une partie inférieure sous la forme d'un cône droit prolongé à son sommet par un tube d'injection de réactifs gazeux et une partie supérieure sous la forme d'un cylindre droit borgne, le cône et/ou la surface latérale du cylindre borgne comprenant deux perçages latéraux dont un est prolongé par un tube d'injection de réactifs solides et l'autre est prolongé par un tube de sortie de produits issus de la réaction, le fond du cylindre borgne dont la face externe est destinée à recevoir le rayonnement solaire, procédé selon lequel on règle le jet de réactifs gazeux de sorte qu'il vienne impacter la face interne du fond du cylindre borgne.

Selon un mode de réalisation avantageux du procédé, l'impact du jet de réactifs gazeux est réalisé sur une surface structurée de la face interne.

L'invention consiste donc essentiellement à réaliser un réacteur à jet solaire en dimensionnant le réacteur et réglant le jet de sorte que ce dernier impacte la paroi de transfert (jet impactant), formée par le fond du cylindre.

La face de transfert de chaleur impactée par le jet est une paroi structurée. Ainsi, de meilleurs coefficients d'échanges thermiques seront obtenus en paroi grâce à cette combinaison judicieuse des propriétés des écoulements de jets impactant, qui permettent d'obtenir de très bons transferts de chaleur, et le réacteur à jet qui permet un écoulement de jet et avec sa paroi structurée également une amélioration des transferts de chaleur.

Le jet est réglé pour venir impacter le centre de la plaque, ce qui permet à la fois de minimiser le gradient face interne-face externe du fond du cylindre de l'enveloppe mais aussi le gradient radial puisque les systèmes solaires à concentration présentent des pics de flux au centre de la tâche focale zone où le jet va évacuer le maximum de calories. La structuration de surface du fond du cylindre permet d'améliorer les échanges en périphérie du jet [7].

Par « surface structurée », on entend dans le cadre de l'invention, une surface non plane, qui peut être texturée ou avec des reliefs géométriques en saillie et/ou en retrait (nervures, rainures). Ainsi, une paroi de transfert à la surface structurée est une surface texturée ou une surface plane à une ou plusieurs nervures et/ou rainures. La surface texturée présente une rugosité, que cette dernière soit régulière ou aléatoire.

L'invention a enfin pour objet l'utilisation du réacteur solaire décrit précédemment pour la gazéification d'une charge carbonée en produits de réaction, réaction de gazéification d'une biomasse, notamment une biomasse ligno-cellulosique, ou pour une réaction de reformage. D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] est une vue schématique en coupe longitudinale d'un réacteur solaire selon l'état de l'art à mode de chauffage direct.
[Fig 2] est une vue schématique en coupe longitudinale d'un réacteur solaire selon l'état de l'art à mode de chauffage indirect.
[Fig 3] est une vue schématique en coupe longitudinale d'un réacteur à jet selon l'état de l'art à chauffage externe.
[Fig 4] est une vue schématique en coupe longitudinale d'un réacteur solaire à jet selon l'état de l'art à apport de chaleur par rayonnement solaire.
[Fig 5] est une vue schématique en coupe longitudinale d'un autre réacteur solaire à jet selon l'état de l'art à apport de chaleur par rayonnement solaire.
[Fig 6] est une vue schématique en coupe longitudinale d'un réacteur solaire à jet selon l'invention.
[Fig 7] est une vue en perspective d'un exemple de réacteur solaire à jet selon l'invention.
[Fig 8] est une vue de dessus du réacteur selon la figure 7.
[Fig 8A] est une vue en coupe longitudinale selon A-A du réacteur selon les figures 7 et 8.
[Fig 9] est une vue en perspective d'un mode de réalisation avantageux de réacteur solaire à jet selon l'invention, intégrant un cylindre de confinement à l'intérieur de la chambre de réaction.
[Fig 10] est une vue de dessus du réacteur selon la figure 9.
[Fig 10A] est une vue en coupe longitudinale selon A-A du réacteur selon les figures 9 et 10.
[Fig 11] est une vue en perspective d'un autre mode de réalisation avantageux de réacteur solaire à jet selon l'invention, intégrant un cylindre de canalisation du jet en sus du cylindre de confinement à l'intérieur de la chambre de réaction.
[Fig 12] est une vue de dessus du réacteur selon la figure 11.
[Fig 12A] est une vue en coupe longitudinale selon A-A du réacteur selon les figures 11 et 12.
[Fig 13] est une vue en perspective d'une variante de réalisation avantageuse de réacteur solaire à jet selon l'invention, intégrant une hélice d'échange thermique autour du cylindre de confinement à l'intérieur de la chambre de réaction.
[Fig 14] est une vue de dessus du réacteur selon la figure 13.
[Fig 14A] est une vue en coupe longitudinale selon A-A du réacteur selon les figures 13 et 14.
[Fig 15] est une vue en perspective d'une autre variante de réalisation avantageuse de réacteur solaire à jet selon l'invention, intégrant des ailettes d'échange autour du cylindre de confinement à l'intérieur de la chambre de réaction.
[Fig 16] est une vue de dessus du réacteur selon la figure 15.
[Fig 16A] est une vue en coupe longitudinale selon A-A du réacteur selon les figures 15 et 16.

### Description détaillée

Les figures 1 à 5 sont relatives à des exemples différents des réacteurs solaires et à jet selon l'état de l'art. Ces figures 1 à 5 ont déjà été commentées en préambule et ne le sont donc pas plus ci-après.

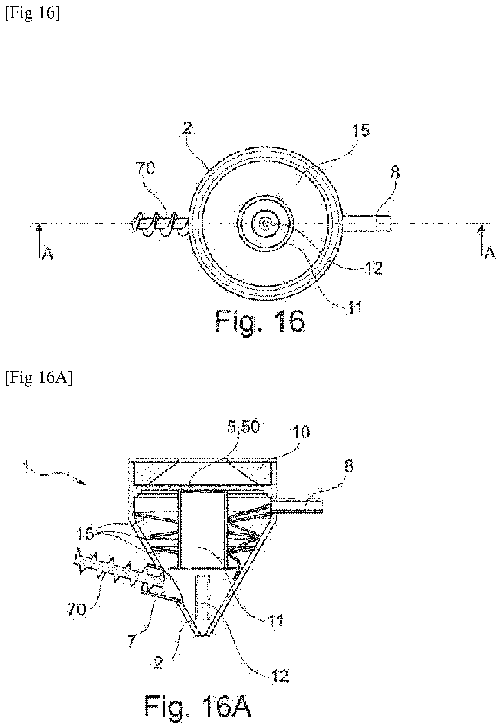

Par souci de clarté, les mêmes références désignant les mêmes éléments selon l'état de l'art et selon l'invention sont utilisées pour toutes les figures 1 à 16A.

Dans l'ensemble de la présente demande, les termes « inférieur », « supérieur », « bas », « haut », « dessous » et « dessus » sont à comprendre par référence par rapport à un réacteur à jet solaire agencé avec son axe longitudinal à la verticale.

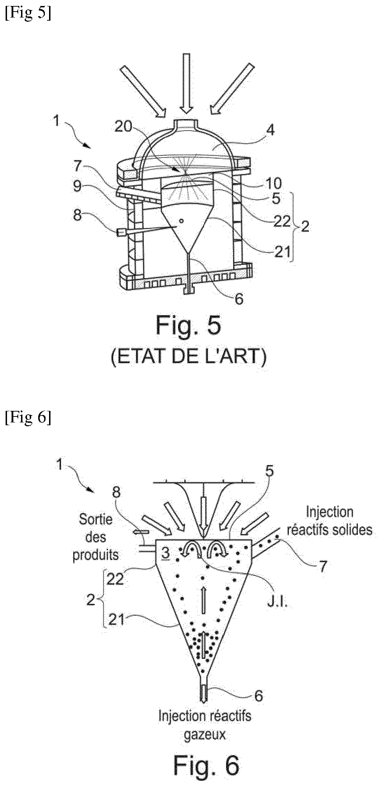

On a représenté en figure 5, un premier exemple de réacteur solaire 1 tel qu'il fonctionne lors de l'injection des gaz réactifs et des réactifs solides.

Ce réacteur 1 comprend une enveloppe 2 délimite une chambre de réaction 3 dans laquelle une réaction chimique endothermique, telle qu'une gazéification de biomasse, doit avoir lieu.

La partie inférieure 21 de l'enveloppe 2 est un cône droit prolongé à son sommet par une entrée 6 d'injection de réactifs gazeux et la partie supérieure 22 est un cylindre droit borgne. Un tube 7 d'injection de réactifs solides débouche également dans la chambre de réaction 3 ainsi qu'un tube 8 par lequel les produits issus de la réaction sont évacués.

Le fond 5 du cylindre borgne constitue la paroi de transfert thermique sur laquelle le rayonnement solaire concentré est focalisé selon une gaussienne symbolisée sur cette figure 6.

Selon l'invention, la face interne, c'est-à-dire celle tournée vers la chambre de combustion 3 présente une surface structurée et le jet de réactifs gazeux est réglé de sorte qu'il vienne impacter cette surface structurée.

L'ensemble de l'enveloppe 2 à l'exception du fond est en un alliage Fe-Cr-Al tandis que le fond 5 est en carbure de silicium (SiC).

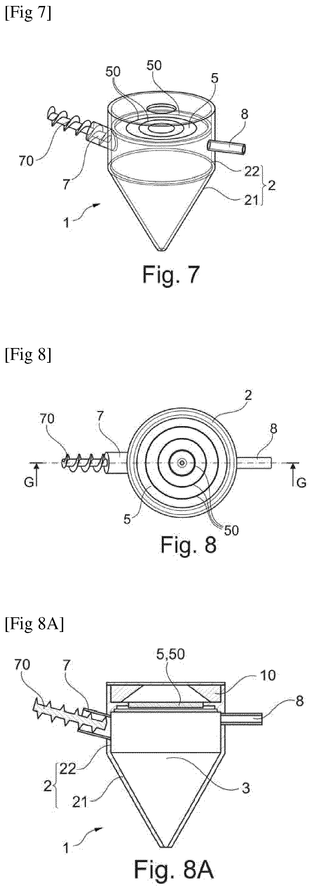

Les figures 7 à 8A illustrent une variante de réalisation selon laquelle le fond 5 est une plaque rapportée et fixée à l'intérieur du cylindre 22 et qui comprend des nervures 50 centrées sur le centre du cylindre et concentriques.

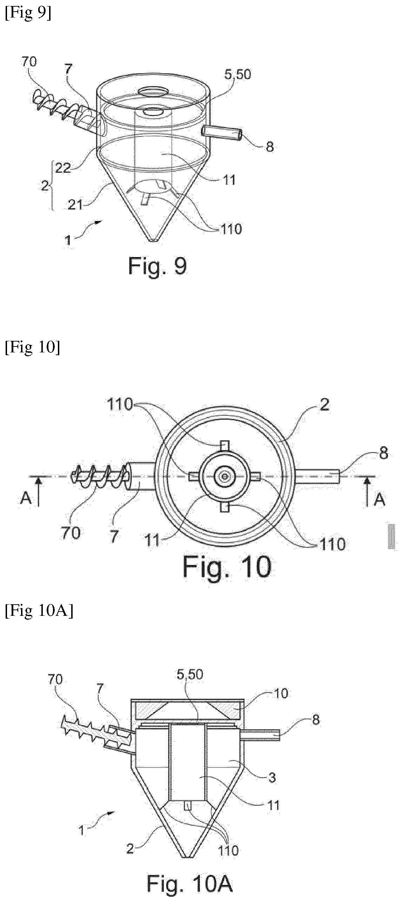

Les figures 9 à 10A illustrent un mode de réalisation selon lequel un cylindre creux de confinement 11 est agencé à l'intérieur de l'enveloppe 2 avec son extrémité inférieure débouchant dans cette dernière et son extrémité supérieure soudée sur la plaque 5 à nervures 50. Ce cylindre de confinement 11 est supporté par des pattes 110 dans le prolongement de son extrémité inférieure, fixées ou en appui contre le cône 21 de l'enveloppe. Ce cylindre de confinement 11 permet d'améliorer l'hydrodynamique du réacteur, en diminuant l'entraînement des particules et en stabilisant le régime de jet injecté.

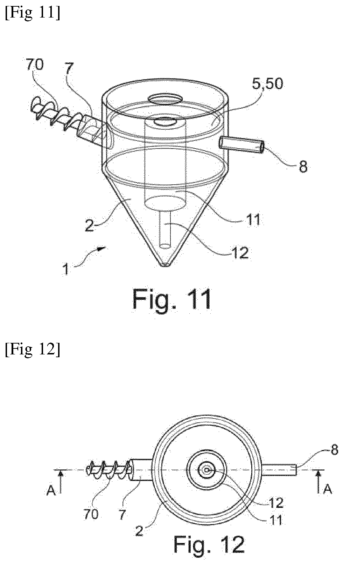

Les figures 11 à 12A illustrent un mode de réalisation selon lequel un cylindre creux de canalisation de jet 12 est agencé à l'intérieur de l'enveloppe 2 avec ses deux extrémités débouchant dans celle-ci. Le cylindre de confinement 11 est agencé dans le prolongement du cylindre de canalisation de jet 12 qui est en regard du tube 6 d'injection des réactifs gazeux. Ce cylindre creux 12 permet également d'améliorer l'hydrodynamique en canalisant le jet à la base du cône 21.

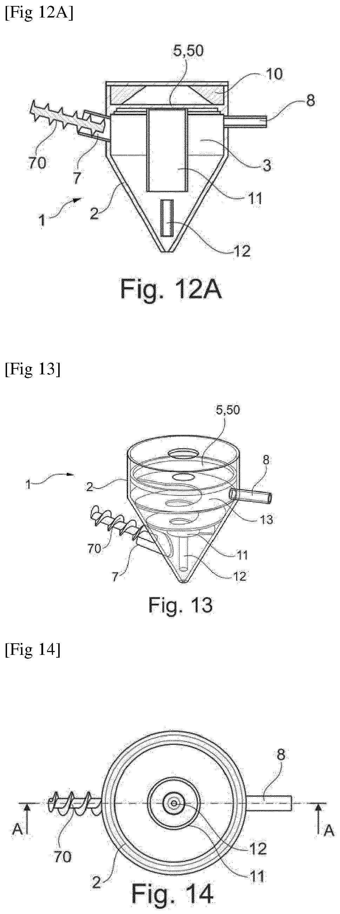

Les figures 13 à 14A illustrent une variante de réalisation selon laquelle une hélice 13 est enroulée et fixée autour du cylindre de confinement 11 à l'intérieur de la chambre de réaction 3. Cette hélice 13 permet d'augmenter la surface d'échange thermique au sein de la chambre de réaction 3 et également d'augmenter le temps de séjour des gaz dans la chambre 3 et de diminuer l'entraînement des particules des réactifs solides.

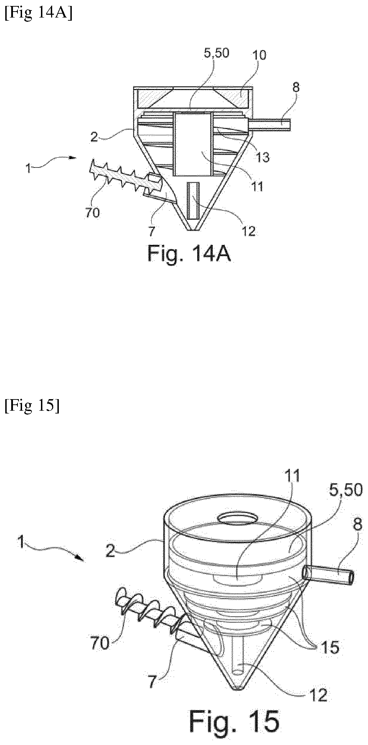

Les figures 15 à 16A illustrent une variante de réalisation selon laquelle, en lieu et place de l'hélice, des ailettes 15 sont fixées le long et autour du cylindre de confinement 11.

Dans l'ensemble des variantes illustrées, le tube 7 d'injection des particules solides et le tube 8 de sortie des produits issus de la réaction sont diamétralement opposés. Une vis sans fin 70 logée dans le tube d'injection 7 facilite l'injection des particules.

Dans les variantes des figures 7 à 8A, 9 à 10A, 11 à 12A, le tube 7 d'injection des particules traverse la paroi latérale du cylindre 22, tandis que dans les variantes des figures 13 à 14A, 15 à 16A, il traverse le cône 21.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention telle que spécifiée dans les revendications ajoutées.

### Liste des références citées

[1]: Steinfeld, R. Palumbo, « Solar thermochemical process technology », Encyclopedia of physical science & technologie, R. A. Meyers Ed., Academic Press, 15, 237-256, 2001.
[2]:C. Agrafiotis, H.v. Storch, M. Roeb, C. Sattler, « Solar thermal reforming of methane feedstocks for hydrogen and syngas production »-A review, Renewable and Sustainable Energy Reviews, 29, 2014, 656-682.
[3]: M. Puig-Arnavat, E.A. Tora, J.C. Bruno, A. Coronas, « State of the art on reactors design for solar gasification of carbonaceous feedstock », Solar Energy, 97, 2013, 67-84.
[4]: Lopez, G., Cortazar, M., Alvarez, J., Amutio, M., Bilbao, J., & Olazar, M. (2017). "Assessment of a conical spouted with an enhanced fountain bed for biomass gasification." Fuel, 203, 825-831.
[5] : Bellouard Q., « Valorisation de biomasse en vecteur énergétique par voie thermochimique solaire », thèse, 2016.
[6] : Yokomine, T., Shimizu, A., Saitoh, A., & Higa, K. (2002). "Heat transfer of multiple impinging jets with gas-solid suspensions." Experimental thermal and fluid science, 26 (6-7), 617-626.
[7] : Kito, M., Takezaki, M., Shakouchi, T., Tsujimoto, K., & Ando, T. (2012). "Enhancement of impingement heat transfer on a flat plate with ribs. " World Academy of Science, Engineering and Technology, 6, 1367-1373.

## Revendications

1. Réacteur solaire (1) comprenant une enveloppe (2) délimitant une chambre de réaction (3), l'enveloppe comprenant une partie inférieure (21) sous la forme d'un cône droit prolongé à son sommet par une entrée d'injection (6) de réactifs gazeux et une partie supérieure (22) sous la forme d'un cylindre droit borgne (22), le cône et/ou la surface latérale du cylindre borgne comprenant deux perçages latéraux dont un est prolongé par un tube (7) d'injection de réactifs solides et l'autre est prolongé par un tube (8) de sortie de produits issus de la réaction, le fond (5) du cylindre borgne, dont la face externe est destinée à recevoir le rayonnement solaire, présentant une face interne, **caractérisé en ce que** la face interne est destinée à être impactée par le jet de réactifs gazeux, la face interne ayant une surface structurée, la surface structurée étant une surface texturée ou une surface plane à une ou plusieurs nervures et/ou rainures.

2. Réacteur solaire (1) selon la revendication 1 , la face externe ayant une surface structurée.

3. Réacteur solaire (1) selon la revendication 2, la surface structurée de la face externe étant une surface texturée ou une surface plane à une ou plusieurs nervures et/ou rainures.

4. Réacteur solaire (1) selon l'une des revendications précédentes, comprenant un cylindre creux, dit cylindre de confinement (11), agencé à l'intérieur de l'enveloppe avec son extrémité inférieure débouchant dans cette dernière et son extrémité supérieure fermée par la face interne du fond du cylindre borgne.

5. Réacteur solaire (1) selon la revendication 4, le cylindre de confinement étant soudé sur la face interne du fond du cylindre borgne.

6. Réacteur solaire (1) selon la revendication 4 ou 5, le cylindre de confinement étant supporté par des pattes (110) dans le prolongement de son extrémité inférieure, fixées ou en appui contre le cône de l'enveloppe.

7. Réacteur solaire (1) selon l'une des revendications 4 à 6, comprenant une hélice (13) enroulée et fixée autour du cylindre de confinement ou des ailettes (15) fixées le long et autour du cylindre de confinement à l'intérieur de la chambre de réaction.

8. Réacteur solaire (1) selon l'une des revendications précédentes, comprenant un cylindre creux, dit cylindre de canalisation de jet (12), agencé à l'intérieur de l'enveloppe avec ses deux extrémités débouchant dans celle-ci, dont une est en regard du tube d'injection des réactifs gazeux.

9. Réacteur solaire (1) selon la revendication 8 en combinaison avec l'une des revendications 5 à 8, le cylindre de confinement étant agencé dans le prolongement du cylindre de canalisation de jet.

10. Réacteur solaire (1) selon l'une des revendications précédentes, le fond du cylindre borgne délimitant la chambre de réaction étant une plaque rapportée et fixée à l'intérieur de la surface latérale du cylindre.

11. Réacteur solaire (1) selon l'une des revendications précédentes, le cône et la surface latérale du cylindre délimitant la chambre de réaction étant en un même alliage métallique résistant à haute température, de préférence un alliage fer-chrome-aluminium tandis que le fond du cylindre est en carbure de silicium (SiC) ou en graphite revêtu de SiC ou en tungstène.

12. Réacteur solaire (1) selon l'une des revendications précédentes, comprenant une vis sans fin (70) agencée dans le tube d'injection des réactifs solides.

13. Procédé de fonctionnement d'un réacteur solaire (1) destiné à la conversion thermochimique d'une charge carbonée, le réacteur comprenant une enveloppe (2) délimitant une chambre de réaction (3), l'enveloppe comprenant une partie inférieure (21) sous la forme d'un cône droit prolongé à son sommet par un tube (6) d'injection de réactifs gazeux et une partie supérieure (22) sous la forme d'un cylindre droit borgne, le cône et/ou la surface latérale du cylindre borgne comprenant deux perçages latéraux dont un est prolongé par un tube (7) d'injection de réactifs solides et l'autre est prolongé par un tube (8) de sortie de produits issus de la réaction, le fond (5) du cylindre borgne dont la face externe est destinée à recevoir le rayonnement solaire, **caractérisé en ce que** on règle le jet de réactifs gazeux de sorte qu'il vienne impacter la face interne du fond du cylindre borgne.

14. Procédé de fonctionnement selon la revendication 13, l'impact du jet de réactifs gazeux étant réalisé sur une surface structurée de la face interne.

15. Utilisation du réacteur solaire (1) selon l'une des revendications 1 à 12 pour la gazéification d'une charge carbonée en produits de réaction, réaction de gazéification d'une biomasse, notamment une biomasse ligno-cellulosique, ou pour une réaction de reformage.

## Patentansprüche

1. Solarreaktor (1), umfassend einen Mantel (2), der eine Reaktionskammer (3) begrenzt, wobei der Mantel einen unteren Teil (21) in Form eines geraden Kegels, der an seiner Spitze durch einen Einleitungseinlass (6) für gasförmige Reaktanten verlängert wird, und einen oberen Teil (22) in Form eines geraden Blindzylinders (22) umfasst, wobei der Kegel und/oder die Seitenfläche des Blindzylinders zwei seitliche Bohrungen umfasst bzw. umfassen, von denen eine durch ein Einleitungsrohr (7) für feste Reaktanten verlängert wird und die andere durch ein Auslassrohr (8) für aus der Reaktion hervorgegangene Produkte verlängert wird, wobei der Boden (5) des Blindzylinders, dessen Außenseite dazu bestimmt ist, die Sonnenstrahlung aufzunehmen, eine Innenseite aufweist, **dadurch gekennzeichnet, dass** die Innenseite dazu bestimmt ist, von dem Strahl gasförmiger Reaktanten getroffen zu werden, wobei die Innenseite eine strukturierte Fläche hat,
wobei die strukturierte Fläche eine texturierte Fläche oder eine plane Fläche mit einer oder mehreren Rippen und/oder Rillen ist.

2. Solarreaktor (1) nach Anspruch 1, wobei die Außenseite eine strukturierte Fläche hat.

3. Solarreaktor (1) nach Anspruch 2, wobei die strukturierte Fläche der Außenseite eine texturierte Fläche oder eine plane Fläche mit einer oder mehreren Rippen und/oder Rillen ist.

4. Solarreaktor (1) nach einem der vorhergehenden Ansprüche, umfassend einen hohlen Zylinder, Einschlusszylinder (11) genannt, der im Inneren des Mantels mit seinem in Letzterem mündenden unteren Ende und seinem durch die Innenseite des Bodens des Blindzylinders verschlossenen oberen Ende angeordnet ist.

5. Solarreaktor (1) nach Anspruch 4, wobei der Einschlusszylinder an die Innenseite des Bodens des Blindzylinders geschweißt ist.

6. Solarreaktor (1) nach Anspruch 4 oder 5, wobei der Einschlusszylinder durch Laschen (110) in der Verlängerung seines unteren Endes gestützt wird, die an dem Kegel des Mantels befestigt sind oder anliegen.

7. Solarreaktor (1) nach einem der Ansprüche 4 bis 6, umfassend eine Helix (13), die um den Einschlusszylinder gewendelt und befestigt ist, oder Flügel (15), die entlang des und um den Einschlusszylinder im Inneren der Reaktionskammer befestigt sind.

8. Solarreaktor (1) nach einem der vorhergehenden Ansprüche, umfassend einen hohlen Zylinder, Strahlkanalisationszylinder (12) genannt, der im Inneren des Mantels mit seinen beiden in diesem mündenden Enden angeordnet ist, von denen eines gegenüber dem Einleitungsrohr für gasförmige Reaktanten liegt.

9. Solarreaktor (1) nach Anspruch 8 in Kombination mit einem der Ansprüche 5 bis 8, wobei der Einschlusszylinder in der Verlängerung des Strahlkanalisationszylinders angeordnet ist.

10. Solarreaktor (1) nach einem der vorhergehenden Ansprüche, wobei der Boden des die Reaktionskammer begrenzenden Blindzylinders eine angesetzte und im Inneren der Seitenfläche des Zylinders befestigte Platte ist.

11. Solarreaktor (1) nach einem der vorhergehenden Ansprüche, wobei der Kegel und die Seitenfläche des Zylinders, die die Reaktionskammer begrenzen, aus einer selben hochtemperaturbeständigen Metalllegierung, bevorzugt einer Eisen-Chrom-Aluminium-Legierung, sind, während der Boden des Zylinders aus Siliciumcarbid (SiC) oder aus mit SiC überzogenem Graphit oder aus Wolfram ist.

12. Solarreaktor (1) nach einem der vorhergehenden Ansprüche, umfassend eine Schnecke (70), die in dem Einleitungsrohr für feste Reaktanten angeordnet ist.

13. Verfahren zum Betreiben eines Solarreaktors (1), der zur thermochemischen Umwandlung einer kohlenstoffhaltigen Charge bestimmt ist, wobei der Reaktor einen Mantel (2) umfasst, der eine Reaktionskammer (3) begrenzt, wobei der Mantel einen unteren Teil (21) in Form eines geraden Kegels, der an seiner Spitze durch einen Einleitungseinlass (6) für gasförmige Reaktanten verlängert wird, und einen oberen Teil (22) in Form eines geraden Blindzylinders umfasst, wobei der Kegel und/oder die Seitenfläche des Blindzylinders zwei seitliche Bohrungen umfasst bzw. umfassen, von denen eine durch ein Einleitungsrohr (7) für feste Reaktanten verlängert wird und die andere durch ein Auslassrohr (8) für aus der Reaktion hervorgegangene Produkte verlängert wird, wobei der Boden (5) des Blindzylinders, dessen Außenseite dazu bestimmt ist, die Sonnenstrahlung aufzunehmen, **dadurch gekennzeichnet, dass** der Strahl gasförmiger Reaktanten so geregelt wird, dass er auf die Innenseite des Bodens des Blindzylinders trifft.

14. Verfahren zum Betreiben nach Anspruch 13, wobei das Auftreffen des Strahls gasförmiger Reaktanten auf einer strukturierten Fläche der Innenseite ausgeführt wird.

15. Verwendung des Solarreaktors (1) nach einem der Ansprüche 1 bis 12 zur Vergasung einer kohlenstoffhaltigen Charge zu Reaktionsprodukten, Reaktion zur Vergasung einer Biomasse, insbesondere einer lignocellulosehaltigen Biomasse, oder für eine Reformierungsreaktion.

## Claims

1. Solar reactor (1) comprising a shell (2) delimiting a reaction chamber (3), the shell comprising a lower part (21) in the form of a straight cone continued at its tip by an injection inlet (6) for gaseous reactants and an upper part (22) in the form of a blind straight cylinder (22), the cone and/or the lateral surface of the blind cylinder comprising two lateral holes, of which one is continued by an injection tube (7) for solid reactants and the other is continued by an outlet tube (8) for products resulting from the reaction, the end wall (5) of the blind cylinder, of which the outer face is intended to receive the solar radiation, having an inner face, **characterized in that** the inner face is intended to be struck by the jet of gaseous reactants, the inner face having a structured surface,
the structured surface being a textured surface or a flat surface with one or more ribs and/or grooves.

2. Solar reactor (1) according to Claim 1, the outer face having a structured surface.

3. Solar reactor (1) according to Claim 2, the structured surface of the outer face being a textured surface or a flat surface with one or more ribs and/or grooves.

4. Solar reactor (1) according to one of the preceding claims, comprising a hollow cylinder, referred to as containment cylinder (11), arranged inside the shell with its lower end leading into the latter and its upper end closed by the inner face of the end wall of the blind cylinder.

5. Solar reactor (1) according to Claim 4, the containment cylinder being welded to the inner face of the end wall of the blind cylinder.

6. Solar reactor (1) according to Claim 4 or 5, the containment cylinder being supported by tabs (110) in the continuation of its lower end, which are fixed or bear against the cone of the shell.

7. Solar reactor (1) according to one of Claims 4 to 6, comprising a helix (13) wound and fixed around the containment cylinder or fins (15) fixed along and around the containment cylinder inside the reaction chamber.

8. Solar reactor (1) according to one of the preceding claims, comprising a hollow cylinder, referred to as jet channelling cylinder (12), arranged inside the shell with its two ends leading into the latter, one of which faces the injection tube for gaseous reactants.

9. Solar reactor (1) according to Claim 8 in combination with one of Claims 5 to 8, the containment cylinder being arranged in the continuation of the jet channelling cylinder.

10. Solar reactor (1) according to one of the preceding claims, the end wall of the blind cylinder delimiting the reaction chamber being a plate fitted and fixed on the inside of the lateral surface of the cylinder.

11. Solar reactor (1) according to one of the preceding claims, the cone and the lateral surface of the cylinder delimiting the reaction chamber being made of one and the same high-temperature-resistant metal alloy, preferably an iron-chromium-aluminium alloy, whereas the end wall of the cylinder is made of silicon carbide (SiC) or SiC-coated graphite or tungsten.

12. Solar reactor (1) according to one of the preceding claims, comprising an endless screw (70) arranged in the injection tube for solid reactants.

13. Method for operating a solar reactor (1) intended for the thermochemical conversion of a carbon-containing feedstock, the reactor comprising a shell (2) delimiting a reaction chamber (3), the shell comprising a lower part (21) in the form of a straight cone continued at its tip by an injection inlet (6) for gaseous reactants and an upper part (22) in the form of a blind straight cylinder (22), the cone and/or the lateral surface of the blind cylinder comprising two lateral holes, of which one is continued by an injection tube (7) for solid reactants and the other is continued by an outlet tube (8) for products resulting from the reaction, the end wall (5) of the blind cylinder, of which the outer face is intended to receive the solar radiation, **characterized in that** the jet of gaseous reactants is adjusted such that it strikes the inner face of the end wall of the blind cylinder.

14. Operating method according to Claim 13, the jet of gaseous reactants being made to strike a structured surface of the inner face.

15. Use of the solar reactor (1) according to one of Claims 1 to 12 for the gasification of a carbon-containing feedstock to afford reaction products, a reaction for gasification of a biomass, notably a lignocellulosic biomass, or for a reforming reaction.
